# EUROPÄISCHE PATENTANMELDUNG

(11) **EP 1 103 794 A2**
(43) Veröffentlichungstag der Anmeldung: **30.05.2001**
(21) Anmeldenummer: 00123696.7
(22) Anmeldetag: 31.10.2000
(51) Int. Cl.: G01F 23/00, B60S 1/50, B60K 15/04

(54) **Füllstandsanzeige für einen Waschwasserbehälter**

(30) Priorität: 17.11.1999 DE 19955077
(71) Anmelder: Mannesmann VDO AG, 60388 Frankfurt am Main (DE)
(72) Erfinder: Petzold, Sven, 65191 Wiesbaden (DE); Uenver, Ralph, 65623 Netzbach (DE); Kober, Rainer, 64297 Darmstadt (DE)
(74) Vertreter: Klein, Thomas, Dipl.-Ing. (FH)

(57) **Zusammenfassung**

Füllstandsanzeigen für Waschwasserbehälter in Kraftfahrzeugen sind bisher direkt am Waschwasserbehälter angeordnet oder im Kombiinstrument des Kraftfahrzeuges integriert. Trotz der vorhandenen Information, wird das Auffüllen des Behälters bei einem zu niedrigen Füllstand oftmals hinausgezögert. Die neue Füllstandsanzeige soll den Füllstand wirksamer anzeigen. Mit der Anordnung der Füllstandsanzeige im Bereich des Tankeinfüllstutzens wird der Füllstand im Waschwasserbehälter dem Fahrer nur dann angezeigt, wenn er seine Fahrt ohnehin zum Zweck des Betankens unterbrochen hat und frei von anderen Tätigkeiten ist, so daß eine Ablenkung weitestgehend ausgeschlossen ist.

## Beschreibung

Gegenstand der Erfindung ist eine Füllstandsanzeige für einen Waschwasserbehälter wie sie vorzugsweise in Kraftfahrzeugen eingesetzt werden.

Es ist bekannt, in Kraftfahrzeugen angeordnete Waschwasserbehälter auszurüsten, um dem Fahrer den aktuellen Füllstand im Waschwasserbehälter anzuzeigen. Derartige Füllstandsanzeigen sind sowohl als Anzeigen des gesamten Füllstandes als auch als Restmengenanzeiger bekannt.

Im wesentlichen sind zwei Arten von Anzeigevorrichtungen bekannt. Neben mechanischen Anzeigevorrichtungen, die in der Regel schwimmerbetrieben ein Ablesen direkt am Waschwasserbehälter ermöglichen, sind eine Vielzahl von elektrischen Anzeigevorrichtungen bekannt, bei denen der Füllstand mittels eines oder mehrerer Sensoren detektiert wird und ein daraus gewonnenes elektrisches Signal zur Anzeige des Füllstandes genutzt wird. In der Regel ist die letztgenannte Füllstandsanzeige im Kombiinstrument des Kraftfahrzeuges integriert und informiert den Fahrer bei eingeschalteter Zündung permanent über den aktuellen Füllstand bzw. über das Unterschreiten einer bestimmten Restmenge im Waschwasserbehälter.

Während beispielsweise das Nichtbeachten der Anzeige für eine zu hohe Kühlwassertemperatur unmittelbar zu Schäden am Kraftfahrzeug führt, ist diese Gefahr bei der Füllstandsanzeige für das Waschwasser nicht der Fall. Infolgedessen wird trotz der permanenten Anzeige eines zu niedrigen Füllstandes das Auffüllen des Waschwassers oftmals so lang hinausgezögert, bis der Waschwasserbehälter leer ist. Dabei kann es bei leerem Waschwasserbehälter und z.B. widrigen Witterungsumständen, die zu einer eingeschränkten Sicht führen, zu verkehrsgefährdenden Situationen kommen.

Der Erfindung liegt daher die Aufgabe zugrunde, eine Füllstandsanzeige für einen Waschwasserbehälter zu schaffen, die es ermöglicht, den Füllstand wirkungsvoller anzuzeigen.

Gelöst wird die Aufgabe mit den Merkmalen des Anspruchs 1. Vorteilhafte Ausgestaltungen sind in den Unteransprüchen beschrieben.

Die erfindungsgemäße Füllstandsanzeige hat den Vorteil, daß mit der Positionierung im Bereich des Tankeinfüllstutzens der Fahrer genau dann über den Füllstand im Waschwasserbehälter informiert wird, wenn er ohnehin seine Fahrt zum Auffüllen des Kraftstoffbehälters unterbrechen muß. Zum einen wird zumindest zu Beginn des Betankens seine Aufmerksamkeit auf diesen Bereich und damit zwangsläufig auf das Anzeigeelement gelenkt und zum anderen befindet sich der Fahrer zu diesem Zeitpunkt an einem Ort, z.B. einer Tankstelle, an dem sowohl Waschwasser als auch notwendige Zusätze, wie Frostschutz- und Reinigungsmittel, ohne größeren Aufwand verfügbar sind. Ein weiterer Vorteil besteht darin, daß der Fahrer eine Information zum Nachfüllen des Waschwasserbehälters zu einem Zeitpunkt erhält, an dem er in der Regel frei von anderen Tätigkeiten ist, so daß er während des Betankens gleichzeitig den Waschwasserbehälter auffüllen kann. Auf diese Weise nimmt das Auffüllen des Waschwasserbehälters relativ wenig Zeit in Anspruch. Gleichzeitig wird mit der erfindungsgemäßen Einrichtung vermieden, daß der Informationsgehalt vom Fahrer weniger beachtet, bzw. ignoriert wird, wie das beispielsweise bei Anzeigen der Fall ist, die permanent im Sichtbereich des Fahrers angeordnet sind.

Des weiteren hat die Füllstandsanzeige den Vorteil, daß sie von der umgebenden Helligkeit unabhängig, und somit auch bei verminderter Helligkeit das Anzeigeelement gut sichtbar ist.

Im einfachsten Fall ist die Füllstandsanzeige ein Anzeigeelement aus einem lichtdurchlässigen Material, das von mindestens einer Lichtquelle hinterleuchtet wird. Die Lichtquelle kann beispielsweise eine Glühlampe oder eine Leuchtdiode - nachfolgend LED genannt - sein. Damit ist die erfindungsgemäße Füllstandsanzeige besonders einfach aufgebaut. Um Beschädigungen des Anzeigeelements und damit auch der Lichtquelle durch die Zapfpistole zu vermeiden, besitzt das Anzeigeelement eine hinreichende Wanddicke. Damit wird wirksam verhindert, daß Kraftstoffdämpfe mit elektrisch leitenden Teilen in Berührung kommen. Die Füllstandsanzeige kann sowohl in der Tankmulde neben dem Tankeinfüllstutzen als auch an der Tankklappe angeordnet sein.

Eine noch größere Sicherheit gegen Beschädigungen gewährleistet eine Ausgestaltung, bei der die Lichtquelle vom Anzeigeelement räumlich getrennt ist, wobei die Füllstandsanzeige zusätzlich einen Lichtleiter umfaßt, der zwischen der Lichtquelle und dem Anzeigeelement angeordnet ist. Auf diese Weise läßt sich die Lichtquelle in einem ungefährdeten Bereich anordnen. Damit ist nicht nur für den Fall des Betankens, sondern auch bei einem Unfall im Heckbereich des Kraftfahrzeugs die notwendige Sicherheit gegeben.

In Fahrzeugen mit einer Zentralverriegelungsanlage ist die Tankklappe durch diese Anlage verriegelbar. Die Verriegelung übernimmt hierbei ein Aktuator, bestehend aus einem Getriebemotor mit einem Stößel. Dieser Aktuator ist neben der Tankmulde, jedoch hinter der Karosserie angeordnet. Dabei besteht eine vorteilhafte Ausgestaltung darin, die Lichtquelle in das Gehäuse des Aktuators zu integrieren. Zum einen läßt sich so die Lichtquelle mechanisch und vor Verschmutzung ohne ein zusätzliches Gehäuse schützen. Zum anderen sind im Aktuator bereits elektrische Anschlüsse für den Getriebemotor vorhanden, so daß sich ohne größeren Aufwand Anschlüsse für die Lichtquelle anordnen lassen. Weiterhin benötigt die Lichtquelle keine separate Befestigung und kann mit dem Aktuator vormontiert werden.

Darüber hinaus ist es vorteilhaft, das Anzeigeelement am Stößel des Aktuators für die Tankklappenverriegelung anzuordnen. Da der Stößel bereits eine Durchführung durch die Karosserie besitzt, ist mit dieser Anordnung für das Anzeigeelement keine weitere Öffnung in der Karosserie mit der damit verbundenen Abdichtung notwendig. Das Nachrüsten der erfindungsgemäßen Füllstandsanzeige oder der Wechsel auf diese Füllstandsanzeige hat keinerlei Veränderungen der Karosserie zur Folge. Gleichzeitig entfällt eine zusätzliche Montage der Füllstandsanzeige im Bereich des Einfüllstutzens.

Zu einer deutlicheren Anzeige des Füllstandes ist es vorteilhaft, wenn der Stößel beim Öffnen der Tankklappe aus seiner versenkten Position in den Sichtbereich innerhalb der Tankmulde ausfährt. Das Ausfahren des Stößels unabhängig von der Zentralverriegelungsanlage läßt sich einfach bewerkstelligen, indem mit dem Öffnen der Tankklappe ein Schalter, z.B. ein Reed-Kontakt, betätigt wird. Weiterhin ist es möglich, das Ein- und Ausfahren des Stößels an eine Tankverschlußerkennung gemäß DE 44 04 014 A1 zu koppeln, so daß der Stößel beim Entfernen des Tankverschlusses ausfährt und beim Schließen des Tankverschlusses einfährt. Das Einfahren des Stößels läßt sich besonders einfach mittels eines Relais nach einem fest vorgegebenen Zeitintervall auslösen.

In einer anderen Ausgestaltung fährt der Stößel nur dann aus oder wird die Füllstandsanzeige nur dann aktiviert, wenn vom Füllstandssensor im Waschwasserbehälter ein entsprechendes Signal, z.B. Waschwasserbehälter halb voll, Waschwasserbehälter leer, geliefert wird.

Zur noch deutlicheren Anzeige des Füllstandes ist es vorteilhaft, zwei oder mehrere Lichtquellen mit unterschiedlichen Farben anzuordnen, die ein oder mehrere Anzeigeelemente hinterleuchten. Auf diese Weise lassen sich verschiedene Füllstände durch unterschiedliche Farben sichtbar machen. Eine grüne Lichtquelle könnte dabei einen ausreichenden Füllstand signalisieren, eine gelbe Lichtquelle informiert den Fahrer darüber, daß der Füllstand weniger als die Hälfte beträgt und eine rote Lichtquelle zeigt dem Fahrer an, daß sich der Füllstand gegen Null nähert, bzw. der Waschwasserbehälter leer ist.

Derselbe Effekt läßt sich auch mit einer Lichtquelle statt mit mehreren Lichtquellen erreichen, wenn die Lichtquelle bei noch ausreichendem Füllstand während der Anzeige permanent leuchtet und mit Erreichen einer Reservefüllmenge zu blinken beginnt, oder umgekehrt. Dabei ist auch das Betreiben ausschließlich mit einer füllstandsabhängigen Blinkfrequenz denkbar. Es sind aber auch Anzeigekombinationen aus mehreren Lichtquellen möglich, die mit einer füllstandsabhängigen Blinkfrequenz betrieben werden.

Damit die erfindungsgemäße Füllstandsanzeige nicht das Bordnetz oder die Batterie unnötig belastet, ist die Füllstandsanzeige nur dann aktiviert, wenn der Fahrer in den Bereich der Tankmulde, bzw. des Einfüllstutzens eingreift. Zu diesem Zweck ist ein Schalter zum Aktivieren der Füllstandsanzeige angeordnet. Das Aktivieren der Füllstandsanzeige hat zur Folge, daß mittels des Füllstandssensors im Waschwasserbehälter der Füllstand ermittelt, und ein entsprechendes Signal zur Füllstandsanzeige geleitet wird. Vorteilhafterweise läßt sich dieser Schalter mit einem Reed-Kontakt realisieren, indem ein Magnet an der Tankklappe und der Reed-Kontakt am Stößel der Tankklappenverriegelung, an der Karosserie in der Tankmulde oder am Einfüllstutzen angeordnet ist. Im letzteren Fall ist der Magnet am Tankverschluß angeordnet.

In vielen Kraftfahrzeugen ist im Fahrgastraum ein Stellelement zum Entriegeln der Tankklappe angeordnet. In einer besonders einfachen Ausführung wird dieses Stellelement gleichzeitig zum Aktivieren der Füllstandsanzeige genutzt.

In einer anderen Ausgestaltung wird die Füllstandsanzeige für den Waschwasserbehälter beim Betanken aktiviert. Bei einer vorhandenen Tankverschlußerkennung wird die Füllstandsanzeige mit dem Entfernen des Tankverschlusses vom Einfüllstutzen aktiviert. Des weiteren können aber auch die Signale des Füllstandssensors im Kraftstofftank dafür benutzt werden, indem bei einem Ansteigen des Kraftstoffpegels die Füllstandsanzeige für den Waschwasserbehälter aktiviert wird. Zusätzlich kann die Aktivierung an weiter Signale gebunden sein, z.B. Zündung ,"Aus", Raddrehzahl "Null".

Die Deaktivierung der Füllstandsanzeige für den Waschwasserbehälter kann durch einzelne oder durch Kombinationen von mehreren Signalen ausgelöst werden, z.B. Tankklappe ,"geschlossen", Tankverschluß ,"aufgesetzt", Kraftstoffpegel "gleichbleibend", Zündung "Ein", Raddrehzahl "größer Null", Zentralverriegelungsanlage "geschlossen". In einer anderen vorteilhaften Ausgestaltung erfolgt die Deaktivierung der Füllstandsanzeige nach einem vorgegebenen Zeitintervall.

An mehreren Ausführungsbeispielen wird die Erfindung näher erläutert. Dabei zeigen:
- Fig. 1:: eine schematische Darstellung der Füllstandsanzeige in einem Kraftfahrzeug,
- Fig. 2:: den Bereich der Tankmulde mit geöffneter Tankklappe und dem Anzeigeelement,
- Fig. 3:: die Tankmulde im Schnitt mit der Füllstandsanzeige,
- Fig. 4:: eine weitere Ausführungsform der Füllstandsanzeige,
- Fig. 5:: den Stößel der Tankklappenverriegelung.

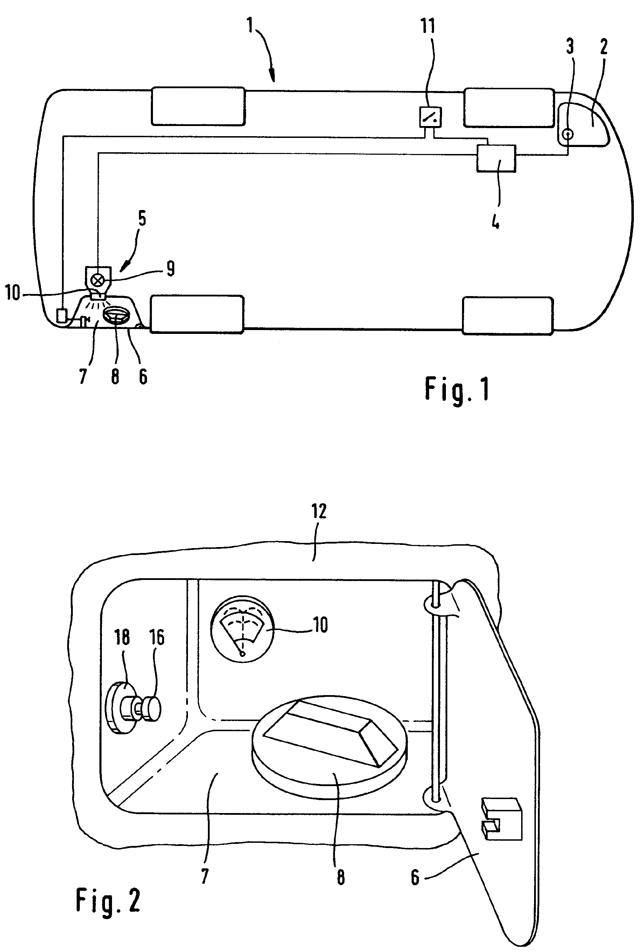

In Fig. 1 ist schematisch ein Kraftfahrzeug 1 dargestellt. Im vorderen Bereich ist ein Waschwasserbehälter 2 mit einem Füllstandssensor 3 angeordnet. Die vom Füllstandssensor 3 gelieferten Signale werden in einer Steuereinheit 4 ausgewertet und in eine entsprechendes Signal umgewandelt, daß einer Füllstandsanzeige 5 zugeführt wird. Die Füllstandsanzeige 5 ist in der von einer Tankklappe 6 abgedeckten Tankmulde 7 im Bereich eines Tankeinfüllstutzens 8 angeordnet. Die Füllstandsanzeige 5 besteht aus einer Glühlampe 9 und einem Anzeigeelement 10 für den Füllstand. Das Anzeigeelement 10 ist aus einem lichtdurchlässigem Material, welches ein Symbol für den Füllstand enthält. Ein im Fahrgastraum angeordnetes Stellelement 11 zur Entriegelung der Tankklappe 6 ist mit der Steuereinheit 4 derart verbunden, daß beim Entriegeln der Füllstandssensor 3 im Waschwasserbehälter 2 ausgewertet wird. Entspricht der Füllstand einem Wert, der zur Anzeige vorgesehen ist, z.B. Behälter halbleer, leuchtet die Füllstandsanzeige 5 auf. Nach einer Zeitspanne von 3 Minuten erlischt die Füllstandsanzeige 5.

In Fig. 2 ist eine mögliche Anordnung des Anzeigeelements 10 zum Tankeinfüllstutzen 8 in der Tankmulde 7 gezeigt.

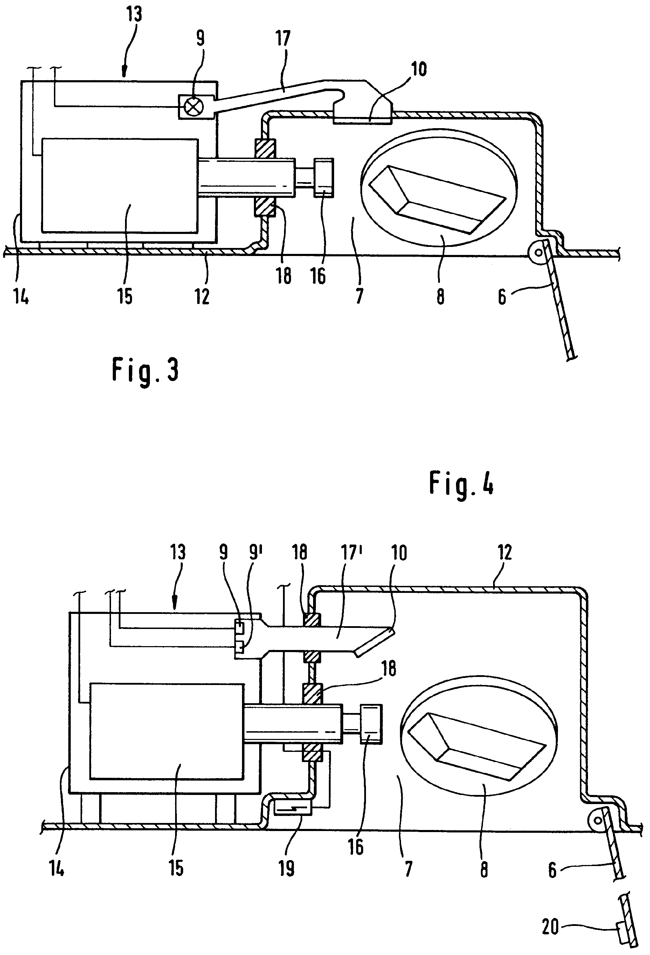

Die Tankmulde 7 ist in Fig. 3 mit geöffneter Tankklappe 6 dargestellt. Hinter dem Karosserieblech 12 befindet sich neben der Tankmulde 7 ein Aktuator 13 als Bestandteil einer Zentralverriegelungsanlage. Der Aktuator 13 besteht aus einem Gehäuse 14 in dem ein Getriebemotor 15 mit einem ausfahrbaren Stößel 16 verbunden ist. Weiterhin enthält das Gehäuse 14 eine Glühlampe 9, deren Licht über einen flexiblen Lichtleiter 17 zum Anzeigeelement 10 geleitet wird.

Fig. 4 zeigt eine weitere Ausgestaltung der erfindungsgemäßen Füllstandsanzeige 5. Im Unterschied zu Fig. 3 sind im Gehäuse 14 eine gelbe und eine rote LED 9, 9' angeordnet, die verschiedene Füllstände durch unterschiedliche Farbgebung signalisieren. Während die gelbe LED 9 bei einem Füllstand "Halbvoll" bis "Mindestmenge" angesteuert wird, erfolgt das Ansteuern der roten LED 9' ab dem Unterschreiten der "Mindestmenge" im Waschwasserbehälter 2. Das Licht wird mittels eines starren Lichtleiters 17' übertragen, dessen der Lichtquelle abgewandtes Ende angeschrägt ist und das Anzeigeelement 10 trägt. Sowohl der Stößel 16 als auch der Lichtleiter 17' sind mit je einer Dichtung 18 gegenüber der Karosserie 12 abgedichtet. Zum Aktivieren der Füllstandsanzeige 5 dient ein Reed-Kontakt 19 als Schalter, der mit einem an der Tankklappe 6 befestigten Magnet 20 zusammenwirkt.

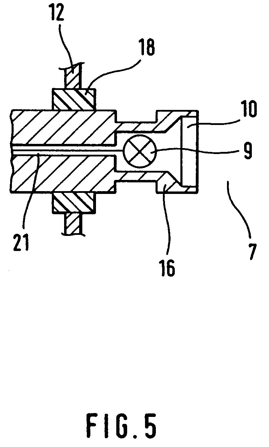

Die Fig. 5 zeigt eine vergrößerte Darstellung des Stößels 16 der Tankklappenverriegelung. Der Stößel 16 besitzt eine Bohrung 21 an deren dem Tankeinfüllstutzen 8 zugewandten Ende das Anzeigeelement 10 befestigt ist. Die Lichtquelle 9 ist unmittelbar dahinter angeordnet. Dabei ist es auch denkbar, die Lichtquelle am anderen Ende des Stößels anzuordnen oder die Lichtquelle im Gehäuse anzuordnen und das Licht mittels eines Lichtleiters in die Bohrung des Stößels einzukoppeln.

## Patentansprüche

1. Füllstandsanzeige für einen Waschwasserbehälter in einem Kraftfahrzeug, die über eine Steuereinheit mit einem im oder am Waschwasserbehälter angeordneten Füllstandssensor verbunden ist, **dadurch gekennzeichnet,** daß die Füllstandsanzeige (5) im Bereich des Tankeinfüllstutzens (8) angeordnet ist und mindestens eine Lichtquelle (9, 9') und mindestens ein Anzeigeelement (10) umfaßt.

2. Füllstandsanzeige nach Anspruch 1, **dadurch gekennzeichnet**, daß die Füllstandsanzeige (5) mindestens einen Lichtleiter (17, 17') umfaßt, der zwischen der Lichtquelle (9, 9') und dem Anzeigeelement (10) angeordnet ist.

3. Füllstandsanzeige nach Anspruch 1 und 2, **dadurch gekennzeichnet**, daß die Lichtquelle (9, 9') eine LED oder eine Glühlampe ist.

4. Füllstandsanzeige nach Anspruch 1 bis 3, **dadurch gekennzeichnet**, daß die Lichtquelle (9, 9') eine mindestens zwei unterschiedliche Farben aussendende Lichtquelle ist.

5. Füllstandsanzeige nach Anspruch 1 bis 4, **dadurch gekennzeichnet**, daß das Anzeigeelement (10) aus einem lichtdurchlässigen Material besteht.

6. Füllstandsanzeige nach Anspruch 1 bis 5, **dadurch gekennzeichnet**, daß die Lichtquelle (9, 9') im oder am Aktuator (13) für die Tankklappenverriegelung, vorzugsweise im Gehäuse (14) angeordnet ist.

7. Füllstandsanzeige nach Anspruch 1 bis 6, **dadurch gekennzeichnet**, daß die Lichtquelle (9, 9') im Stößel (16) des Aktuators (13) angeordnet ist.

8. Füllstandsanzeige nach Anspruch 1 bis 7, **dadurch gekennzeichnet**, daß das Anzeigeelement (10) im oder am Stößel (16) angeordnet ist.

9. Füllstandsanzeige nach Anspruch 1 bis 7, **dadurch gekennzeichnet**, daß das Anzeigeelement (10) neben dem Tankeinfüllstutzen (8) an der Karosserie (12) oder der Tankklappe (6) befestigt ist.

10. Füllstandsanzeige nach Anspruch 1 bis 9, **dadurch gekennzeichnet**, daß die Füllstandsanzeige (5) mit einem Schalter (11, 19, 20) verbunden ist.

11. Füllstandsanzeige nach Anspruch 10, **dadurch gekennzeichnet**, daß der Schalter ein Reed-Kontakt (19) oder ein Stellelement (11) im Fahrgastraum des Fahrzeugs (1) ist.
